# EUROPÄISCHE PATENTSCHRIFT

(11) **EP 0 593 972 B1**
(45) Veröffentlichungstag und Bekanntmachung des Hinweises auf die Patenterteilung: **17.12.1997**
(21) Anmeldenummer: 93116108.7
(22) Anmeldetag: 06.10.1993
(51) Int. Cl.: C04B 35/00

(54) **Verfahren zur Herstellung von Grünlingen keramischer Formkörper**
Process for manufacturing ceramic green bodies
Procédé pour la préparation de corps céramiques verts

(30) Priorität: 19.10.1992 DE 4235150
(43) Veröffentlichungstag der Anmeldung: 27.04.1994
(73) Patentinhaber: DIDIER-WERKE AG, 65189 Wiesbaden (DE)
(72) Erfinder: Leberger, Daniel, D-65388 Schlangenbad (DE); Galle, Erich, D-65599 Dornburg (DE); Weichert, Thomas, Dr., D-65329 Hohenstein 2 (DE)
(74) Vertreter: Brückner, Raimund, Dipl.-Ing.

(56) Entgegenhaltungen:
- EP-A- 0 016 971
- US-A- 3 177 161

## Beschreibung

Die Erfindung betrifft ein Verfahren zur Herstellung von Grünlingen eines keramischen feuerfesten Formkörpers, wobei eine Mischung aus Teilchen eines oder mehrerer anorganischer Materialien und gegebenenfalls anderen Zusätzen in Wasser zusammen mit einem die Grünfestigkeit bewirkenden hochdispersen Metalloxid mittels eines Gefriermediums unterkühlt und zu einem Grünling ausgefroren und dann durch Trocknung bei erhöhter Temperatur von Wasser befreit wird.l

Ein solches Verfahren ist aus der EP 0 016 971 A2 bekannt, wobei ein keramischer Formkörper aus einer wässrigen Aufschlämmung durch Gefrieren geformt, danach aufgetaut, getrocknet und gebrannt wird. Die Bindung wird mit einem gefrierempfindlichen kolloidalen keramischen Sol, wie insbesondere Kieselsol mit 30 % SiO₂ erreicht. Um das Wachstum von Eiskristallen zu inhibieren, werden der teilchenförmigen Aufschlämmung vorteilhafterweise Lithiumionen zugesetzt. Ein ähnliches Verfahren ist auch in der US-A 3 177 161 beschrieben.

Aufgabe der vorliegenden Erfindung ist ein verbessertes Verfahren zur Herstellung von Grünlingen der zuvor beschriebenen Art, bei welchem einerseits nur geringe Mengen an Bindemittel verwendet werden müssen, weiterhin Zusätze wie Verflüssiger eingesetzt werden können und auch basische, anorganische Materialien verwendet werden können, ohne daß ein Zusatz von Lithiumionen erforderlich wäre, sowie ein vorzeitiges Ausflocken vermieden wird, wie es bei Solen auftreten kann. Zur Lösung dieser Aufgabe dient das Verfahren, wie es in dem Kennzeichen des Anspruches 1 beschrieben ist.

Als anorganische Materialien zur Herstellung der Grünlinge können alle üblicherweise auf diesem Fachgebiet verwendeten anorganischen keramischen Ausgangsmaterialien verwendet werden, beispielsweise Silikate, Tonerdematerialien, Spinelle, Magnesiasinter, Mullit, Zirkon, Siliciumcarbid etc. Ebenfalls ist die Verwendung von Mischungen solcher anorganischer Materialien möglich. Die anorganischen Materialien liegen in Teilchenform vor, wobei die Teilchengröße bis zu den üblichen Teilchengrößen, z.B. maximal 6 mm reichen kann. Vorteilhafterweise beträgt die maximale Teilchengröße 2 bis 4 mm, wobei dies von dem Anwendungszweck des aus dem Grünling letztlich erhaltenen keramischen Formkörpers abhängig ist.

Weiterhin ist es bei dem erfindungsgemäßen Verfahren möglich, Verflüssiger einzusetzen. Solche Verflüssiger sind auf dem Fachgebiet an sich bekannte übliche Zusätze, beispielsweise auf Grundlage von Salzen synthetischer Polyelektrolyte. Solche Verflüssiger werden u.a. in fester, trockener Form als feine, freifließende Pulver angeliefert. Ein Beispiel für solche Verflüssiger ist das Natriumsalz einer polykondensierten Sulfonsäure.

Weiterhin werden bei dem erfindungsgemäßen Verfahren ein die Grünfestigkeit bewirkendes, hochdisperses Metalloxid oder Metallhydroxid in trockener Form verwendet (Löslichkeit in Wasser unter 1%). Beispiele für solche die Grünfestigkeit bewirkenden Metalloxide und Metallhydroxide sind beispielsweise nach dem Aerosil-Verfahren hergestellte Oxide oder Hydroxide, wie Titandioxid, Zirkondioxid, Aluminiumoxid oder Siliziumdioxid. Hierbei handelt es sich um handelsübliche Produkte, wie sie beispielsweise von Degussa hergestellt werden. Solche hochdispersen Metalloxide oder Metallhydroxide besitzen üblicherweise spezifische Oberflächen von > 25 m²/g, und sie werden in einer Menge von 0,3 bis 2 Gew.-Teile, vorzugsweise 1 bis 2 Gew.-Teile, bezogen auf 100 Gew.-Teile der übrigen Teilchen der festen anorganischen Materialien, eingesetzt.

Als weiteres Metalloxid und Metallhydroxid kann hochdisperses Magnesiumoxid und Magnesiumhydroxid verwendet werden, die durch naß-chemische Fällungsprozesse hergestellt worden sind.

Bei dem erfindungsgemäßen Verfahren kann den Teilchen aus anorganischem Material das Anmachwasser zugesetzt und dann erst der Verflüssiger oder das Dispergierhilfsmittel zugesetzt werden, oder der Verflüssiger oder das Dispergierhilfsmittel kann zunächst in dem Wasser aufgelöst und dann diese Lösung den anorganischen Teilchen zugesetzt werden.

Bei dem erfindungsgemäßen Verfahren beträgt die Wassermenge üblicherweise 3 bis 20 Gew.-Teile auf 100 Gew.-Teile des anorganischen Materials bzw. der anorganischen Materialien, vorteilhafterweise jedoch nur 3 bis 12 Gew.-Teile Wasser auf 100 Gew.-Teile anorganisches Material.

Die Zusatzmenge des Verflüssigers oder Dispergierhilfsmittels liegt im üblichen Bereich zwischen 0,05 und 1,0 Gew.-Teile auf 100 Gew.-Teile des anorganischen Materials.

Das erfindungsgemäße Verfahren wird so durchgeführt, daß zunächst die Teilchen aus trockenem anorganischem Material mit dem trockenen, hochdispersen Metalloxid oder Metallhydroxid gründlich vermischt werden, beispielsweise während 2 bis 10 Minuten in einem Planetenmischer.

Nach dieser gründlichen Durchmischung von anorganischem Material und die Grünfestigkeit bedingenden, hochdispersen Metalloxid oder Metallhydroxid erfolgt die Zugabe des Wassers bzw. der Lösung des Verflüssigers oder Dispergierhilfsmittels in Wasser in diesem Planetenmischer, woran sich eine weitere Mischzeit von 10 Minuten anschließt. Ebenfalls ist es möglich, nach dem Mischen noch ein Nachmischen unter Vakuum oder unter vermindertem Druck durchzuführen, um gelöste oder eingeschlossene Gase aus der Mischung zu entfernen.

Anschließend erfolgt die Formung der Grünlinge in geeigneten Formen und das Abkühlen mittels eines Gefriermediums in an sich bekannter Weise. Als Gefriermedium wurde bei den nachfolgenden Beispielen 1.2-Äthandiol und Wasser als Gemisch im Verhältnis 1:1 verwendet. Die Abkühlung erfolgt hierbei auf Temperaturen bis zu -30°C, üblicherweise auf -10°C bis -25°C. Durch diesen Gefriervorgang erfolgt eine Verfestigung der geformten Mischung zu einem Grünling. Nach ausreichender Verfestigung des Grünlings kann dieser aus der Form entnommen und in üblicher Weise getrocknet werden. Die Trocknung erfolgt, zumindest in der letzten Stufe, bei erhöhter Temperatur von bis zu 120°C.

Der getrocknete Grünling kann dann gegebenenfalls in an sich bekannter Weise weiteren Behandlungen, z.B. einem Tempern (bei 200 bis 800°C) oder einem Brennen (oberhalb von 800°C) unterworfen werden, um die letztlich gewünschten Formkörper, insbesondere Feuerfestformkörper, zu erhalten.

Die Erfindung wird anhand der folgenden Beispiele näher beschrieben. Bei den Beispielen 1 - 4 nach der Erfindung werden in vorteilhafter Weise hochdisperse Metalloxide in geringer Menge eingesetzt, deren chemischen Zusammensetzung der des anorganischen körnigen Feuerfestmaterials entspricht. Bei dem Vergleichsbeispiel wird das allgemein übliche Kieselsol eingesetzt, wobei ein keramischer Formkörper auf der Basis von Korund mit Si02 als einer wesentlichen Verunreinigung erhalten wird.

### Beispiel 1:

Als anorganisches Material wurde ein Feuerfestmaterial aus Al203 verwendet, als hochdisperses Metalloxid wurde hochdisperses Al203 verwendet, das eine spezifische Oberfläche nach BET von 100 ± 15 m²/g, eine mittlere Größe der Primärteilchen von 13 nm und ein hydrophiles Verhalten gegenüber Wasser zeigt. Als Verflüssiger wurde das Natriumsalz eines synthetischen Polyelektrolyten (Polyacrylat) verwendet.

Es wurde folgende Mischung hergestellt:

| | | |
|---|---|---|
| Sinterkorund | >1 mm | 29 Gew.-Teile |
| " | 0,5-1 mm | 11 Gew.-Teile |
| " | 0,09-0,5 mm | 20 Gew.-Teile |
| " | <0,09 mm | 38,5 Gew.-Teile |
| Al203(hochdispers) | | 1,5 Gew.-Teile |

Aus diesen Trockenstoffen wurde in einem Planetenmischer eine innige Mischung hergestellt, anschließend wurden 6,5 Gew.-Teile Wasser, in denen 0,15 Gew.% Verflüssiger aufgelöst waren, zugesetzt und der Mischvorgang für weitere 10 Minuten fortgeführt.

Anschließend wurde diese Mischung in Formen überführt, hieraus Steine geformt, diese auf -10°C abgekühlt, während 2 Stunden auf dieser niedrigen Temperatur gehalten und anschließend ausgeformt.

Nach dem Trocknen wurden Grünlinge ausreichender Festigkeit erhalten.

Nach dem keramischen Brand bei 1650°C über 5 Stunden konnten folgende Eigenschaften erzielt werden:

| Physikalische Eigenschaften | | Chemische Analyse | |
|---|---|---|---|
| Rohdichte | 3,05 g/cm³ | Al203 | 99,7% |
| Offene Porosität | 20% | Si02 | 0,1% |
| Kaltdruckfestigkeit | 60 N/mm² | Fe203 | 0,1% |

### Beispiel 2:

Als anorganisches Material wurde ein Feuerfestmaterial aus MA-Spinell verwendet, als hochdisperse Metalloxide wurden ein chemisch-reines Mg0 (p.a.) mit einer spezifischen Oberfläche von 55 m²/g und das hochdisperse Al203 (Beispiel 1) in stöchiometrischem Verhältnis verwendet. Als Verflüssiger wurde das Natriumsalz eines synthetischen Polyelektrolyten verwendet.

Es wurde folgende Mischung hergestellt:

| | | |
|---|---|---|
| Schmelzspinell | >1mm | 29 Gew.-Teile |
| " | 0,5-1mm | 11 Gew.-Teile |
| Sinterspinell | 0,09-0,5mm | 20 Gew.-Teile |
| " | <0,09mm | 38 Gew.-Teile |
| Mg0 (hochdispers) | | 0,6 Gew.-Teile |
| Al203 (hochdispers) | | 1,4 Gew.-Teile |

Aus diesen Trockenstoffen wurde in einem Planetenmischer eine innige Mischung hergestellt, anschließend wurden 7 Gew.-Teile Wasser, in denen 0,15 Gew.% Verflüssiger aufgelöst waren, zugesetzt und der Mischvorgang für weitere 10 Minuten fortgeführt.

Nach dem Trocknen wurden Grünlinge ausreichender Festigkeit erhlaten.

### Beispiel 3:

Als anorganisches Material wurde ein Feuerfestmaterial aus Mg0 verwendet, als hochdisperses Metalloxid wurde das hochdisperse Mg0 (Beispiel 2) verwendet.

Es wurde folgende Mischung hergestellt:

| | | |
|---|---|---|
| Sintermagnesia | >1mm | 32 Gew.-Teile |
| " | 0,5-1mm | 20 Gew.-Teile |
| " | 0,09-0,5mm | 22 Gew.-Teile |
| " | <0,09mm | 24 Gew.-Teile |
| Mg0 (hochdispers) | | 2 Gew.-Teile |

Aus diesen Trockenstoffen wurde in einem Planetenmischer eine innige Mischung hergestellt, anschließend wurden 7,25 Gew.-Teile Wasser, in denen 0,15 Gew.% Verflüssiger aufgelöst waren, zugesetzt und der Mischvorgang für weitere 10 Minuten fortgeführt.

Nach dem Trocknen wurden Grünlinge ausreichender Festigkeit erhalten.

Nach dem keramischen Brand bei 1780°C in einem Tunnelofen konnten folgende Eigenschaften erzielt werden:

| Physikalische Eigenschaften | | Chemische Analyse | |
|---|---|---|---|
| Rohdichte | 2,85g/cm³ | Mg0 | 99 % |
| Offene Porosität | 19% | Si02 | 0,1% |
| Kaltdruckfestigkeit | 55N/mm² | Fe203 | 0,1% |
| Druckerweichen DE_{To5} | >1700°C | Ca0 | 0,7% |

### Beispiel 4:

Als anorganisches Material wurde eine Mischung aus Ca0-stabilisiertem Zirkonoxid und unstabilisiertem Zirkonoxid verwendet, als hochdisperses Metalloxid wurde hochdisperses monoklines Zr02 verwendet das eine spezifische Oberfläche nach BET von 40 ± 10 m²/g, eine mittlere Größe der Primärteilchen von 30 nm und ein hydrophiles Verhalten gegenüber Wasser zeigt.

Es wurde folgende Mischung hergestellt:

| | | |
|---|---|---|
| Ca0-stab.Zr02 | >1mm | 30 Gew.-Teile |
| " | 0,5-1mm | 15 Gew.-Teile |
| " | 0,09-0,5mm | 13 Gew.-Teile |
| " | <0,09mm | 30 Gew.-Teile |
| unstab.Zr02 | <0,09mm | 10 Gew.-Teile |
| Zr02(hochdispers) | | 2 Gew.-Teile |

Aus diesen Trockenstoffen wurde in einem Planetenmischer eine innige Mischung hergestellt, anschließend wurden 4 Gew.-Teile Wasser zugesetzt und der Mischvorgang für weitere 10 Minuten fortgeführt.

Nach dem Trocknen wurden Grünlinge ausreichender Festigkeit erhalten.

### Vergleichsbeispiel:

Es wurde ein Vergleichsbeispiel nach dem stand der Technik durchgeführt. Dazu wurden die gleichen Ausgangsrohstoffe mit Ausnahme des hochdispersen Al203 verwendet wie in Beispiel 1.

Es wurde folgende Mischung hergestellt:

| | | |
|---|---|---|
| Sinterkorund | <1mm | 29 Gew.-Teile |
| " | 0,5-1mm | 11 Gew.-Teile |
| " | 0,09-0,5mm | 20 Gew.-Teile |
| " | <0,09mm | 40 Gew.-Teile |

Aus diesen Trockenstoffen wurde in einem Planetenmischer eine innige Mischung hergestellt, anschließend wurden 8 Gew.-Teile eines Kieselsoles mit einem Si02-Feststoffgehalt von 30 Gew.% und 1 Gew.-Teil Wasser zugesetzt und der Mischvorgang für weitere 10 Minuten fortgeführt.

Nach dem Trocknen wurden Grünlinge ausreichender Festigkeit erhalten.

Nach dem keramischen Brand bei 1650°C über 5 stunden konnten folgende Eigenschaften erzielt werden:

| Physikalische Eigenschaften | | Chemische Analyse | |
|---|---|---|---|
| Rohdichte | 3,05 g/cm³ | Al203 | 97,5% |
| Offene Porosität | 20% | Si02 | 2,5% |
| Kaltdruckfestigkeit | 120 N/mm² | Fe203 | 0,1% |

## Patentansprüche

1. Verfahren zur Herstellung von Grünlingen eines keramischen feuerfesten Formkörpers, wobei eine Mischung aus Teilchen eines oder mehrerer anorganischer Materialien und gegebenenfalls anderen Zusätzen in Wasser zusammen mit einem die Grünfestigkeit bewirkenden hochdispersen Metalloxid mittels eines Gefriermediums unterkühlt und zu einem Grünling ausgefroren und dann durch Trocknung bei erhöhter Temperatur von Wasser befreit wird, dadurch gekennzeichnet,
daß zuerst ein die Grünfestigkeit bewirkendes, wasserunlösliches, hochdisperses Metalloxid oder Metallhydroxid mit einer spezifischen Oberfläche > 25 m² /g in einer Menge von 0,3 - 2 Gew.-Teile, bezogen auf 100 Gew.-Teile der übrigen Teilchen der feuerfesten anorganischen Materialien, in der Mischung trocken eingemischt und dann erst das Wasser zugesetzt und eingemischt wird.

2. Verfahren nach Anspruch 1,
dadurch gekennzeichnet,
daß das hochdisperse Metalloxid oder Metallhydroxid in einer Menge von 1 - 2 Gew.-Teile, bezogen auf 100 Gew.-Teile der übrigen Teilchen der feuerfesten anorganischen Materialien eingesetzt wird.

3. Verfahren nach einem der vorhergehenden Ansprüche,
dadurch gekennzeichnet,
daß als anorganische Materialien ein oder mehrere Feuerfestmaterialien eingesetzt werden.

4. Verfahren nach einem der vorhergehenden Ansprüche,
dadurch gekennzeichnet, daß
als anorganisches Material eine oder mehrere basische Feuerfestmaterialien eingesetzt werden.

5. Verfahren nach einem der vorhergehenden Ansprüche,
dadurch gekennzeichnet, daß
der Mischung zusammen mit dem Wasser oder nach Zusatz des Wassers ein Verflüssiger oder Dispergierhilfsmittel zugesetzt wird.

## Claims

1. Method of manufacturing green ceramic, refractory moulded bodies in which a mixture of particles of one or more inorganic materials and optionally other additives in water together with a highly dispersed metal oxide, which is responsible for the green strength, is undercooled by means of a freezing medium and is frozen into a green body and the water is then removed by drying at elevated temperature, characterised in that firstly a water insoluble, highly dispersed metal oxide or metal hydroxide, which produces the green strength, with a specific surface area > 25 m²/g in an amount of 0.3-2 parts by wt., with respect to 100 parts by wt. of the remaining particles of the refractory inorganic materials, is mixed dry into the mixture and only then is the water added and mixed in.

2. Method as claimed in Claim 1, characterised in that the highly dispersed metal oxide or metal hydroxide is added in an amount of 1-2 parts by wt., with respect to 100 parts by wt. of the remaining particles of the refractory, inorganic materials.

3. Method as claimed in one of the preceding claims, characterised in that one or more refractory materials are added as the inorganic materials.

4. Method as claimed in one of the preceding claims, characterised in that one or more basic refractory materials are added as the inorganic materials.

5. Method as claimed in one of the preceding claims, characterised in that a deflocculant or dispersant is added to the mixture together with the water or after the addition of the water.

## Revendications

1. Procédé de préparation d'ébauches crues ou "vertes" de pièces moulées en céramique réfractaire, dans lequel procédé l'on refroidit, à l'aide d'un milieu de congélation, un mélange de particules d'un ou de plusieurs matériaux inorganiques et d'éventuels autres adjuvants, dispersées dans de l'eau avec un oxyde de métal très finement divisé qui apporte une certaine résistance à l'état cru, et l'on fait congeler ce mélange en une ébauche crue qu'on débarrasse ensuite de l'eau qu'elle contient en la faisant sécher à température élevée,
ledit procédé étant caractérisé en ce que l'on commence par incorporer à sec dans le mélange, sous forme très finement divisée, un oxyde ou hydroxyde de métal qui est insoluble dans l'eau, apporte une certaine résistance à l'état cru et présente une aire spécifique supérieure à 25 m²/g, en une quantité de 0,3 à 2 parties en poids pour 100 parties en poids des autres matériaux inorganiques réfractaires en particules, et en ce que ce n'est qu'ensuite qu'on y ajoute et incorpore de l'eau.

2. Procédé conforme à la revendication 1, caractérisé en ce que l'on utilise l'oxyde ou hydroxyde de métal en une quantité de 1 à 2 parties en poids pour 100 parties en poids des autres matériaux inorganiques réfractaires en particules.

3. Procédé conforme à l'une des revendications précédentes, caractérisé en ce que l'on utilise, comme matériaux inorganiques, un ou plusieurs matériaux réfractaires.

4. Procédé conforme à l'une des revendications précédentes, caractérisé en ce que l'on utilise, comme matériaux inorganiques, un ou plusieurs matériaux réfractaires basiques.

5. Procédé conforme à l'une des revendications précédentes, caractérisé en ce que l'on ajoute au mélange, en même temps que de l'eau ou après y avoir ajouté de l'eau, un dispersant auxiliaire ou un fondant.
